# EUROPEAN PATENT APPLICATION

(11) **EP 4 224 237 A1**
(43) Date of publication of application: **09.08.2023**
(21) Application number: 21885240.8
(22) Date of filing: 28.10.2021
(51) Int. Cl.: G02B 26/08, G02B 7/182, B81B 3/00

(54) **LIGHT REFLECTION ASSEMBLY, OPTICAL SWITCH, AND PHOTOGRAPHY DEVICE**

(30) Priority: 31.10.2020 CN 202011196921
(71) Applicant: Huawei Technologies Co., Ltd., Shenzhen, Guangdong 518129 (CN)
(72) Inventor: LIAO, Wenzhe, Shenzhen, Guangdong 518129 (CN); LI, Ming, Shenzhen, Guangdong 518129 (CN); FENG, Jun, Shenzhen, Guangdong 518129 (CN)
(74) Representative: Epping - Hermann - Fischer
(86) International application number: PCT/CN2021/126942
(87) International publication number: WO 2022/089513

(57) **Abstract**

Disclosed is a light reflection assembly, including a reflection element (10), a substrate (20), a first cantilever beam (401), a second cantilever beam (402), a magnetic structure (30), and a support structure (50). The substrate (20) is located on the magnetic structure (30), and the reflection element (10) is located in a hollow region in the middle of the substrate (20). Two ends of the reflection element (10) are connected to the substrate (20) through the first cantilever beam (401) and the second cantilever beam (402), respectively. The first cantilever beam (401) and the second cantilever beam (402) are located on different sides of the reflection element (10) and are disposed along a first axial direction. A front side of the reflection element (10) is configured to reflect incident light. The magnetic structure (30) is configured to drive the reflection element (10) to rotate. The support structure (50) is fastened to the magnetic structure (30). An end that is of the support structure (50) and that is away from the magnetic structure (30) is in contact with a back side of the reflection element (10). The support structure (50) does not move with rotation of the reflection element (10). Such a structure of the light reflection assembly resolves a problem that a cantilever beam (40) is easily damaged, and can be applied to the fields of photography, optical switching, and laser radar. An optical switch and a photographing apparatus are further disclosed.

## Description

This application claims priority to Chinese Patent Application No. 202011196921.1, filed with the China National Intellectual Property Administration on October 31, 2020 and entitled "LIGHT REFLECTION ASSEMBLY, OPTICAL SWITCH, AND PHOTOGRAPHING APPARATUS", which is incorporated herein by reference in its entirety.

### TECHNICAL FIELD

This application relates to the field of micro-electro-mechanical systems, and in particular, to a light reflection assembly, an optical switch, and a photographing apparatus.

### BACKGROUND

Micro-electro-mechanical systems (Micro Electro Mechanical Systems, MEMS) are integrated micro-devices or systems that are made by using conventional semiconductor technologies and materials and that combine a micro-sensor, a micro-actuator, a micro-mechanical mechanism, a signal processing and control circuit, a high-performance electronic integrated device, an interface, communication, and power supply. In optical fiber communication, a micromirror driven by using the MEMS may be used to implement deflection of the micromirror, so that optical switching is performed.

The MEMS micromirror usually includes a micromirror substrate, a micromirror body and a cantilever beam. The micromirror substrate is located on an outer side of the micromirror body. One end of the cantilever beam is connected to the micromirror substrate, and the other end of the cantilever beam is connected to the micromirror body. The cantilever beam can drive the micromirror to deflect at a specific angle. In an actual application, if the MEMS micromirror moves in a direction perpendicular to a horizontal plane, the micromirror body brings a large tensile force to the cantilever beam. Therefore, the cantilever beam has a risk of being damaged.

### SUMMARY

Embodiments of this application provide a light reflection assembly, an optical switch, and a photographing apparatus, to resolve a problem that a cantilever beam is easily damaged.

According to a first aspect, the light reflection assembly provided in an embodiment of this application includes a reflection element, a substrate, a first cantilever beam, a second cantilever beam, a magnetic structure, and a support structure. The substrate is located on the magnetic structure, and the reflection element is located in a hollow region in the middle of the substrate. A first end of the reflection element is connected to the substrate through the first cantilever beam, and a second end of the reflection element is connected to the substrate through the second cantilever beam. A front side of the reflection element is configured to reflect incident light. The magnetic structure is configured to drive the reflection element to rotate. The support structure is fastened to the magnetic structure. An end that is of the support structure and that is away from the magnetic structure is in contact with a back side of the reflection element, and the support structure does not move with rotation of the reflection element.

In this implementation, the support structure is located on the magnetic structure. An end that is of the support structure and that is away from the magnetic structure is in contact with the back side of the reflection element. Therefore, the reflection element in the light reflection assembly is prevented from generating motion with a large amplitude in a direction perpendicular to a horizontal plane. Therefore, the cantilever beams that are in the reflection element and that are used to be connected to the reflection element are effectively protected.

In some possible implementations, on a premise that the rotation of the reflection element is not affected, a position at which the support structure is in contact with the reflection element changes with rotation of the reflection element, so that a rotation angle of the reflection element is more flexible.

In some possible implementations, a contact region between the support structure and the reflection element is located at a center of the reflection element. An impact of the support structure on rotation performance of the reflection element is reduced as much as possible.

In some possible implementations, a material of the support structure is gel, and the support structure is bonded to the back side of the reflection element. In this way, the reflection element may further be prevented from moving as a whole in a direction away from the magnetic structure. In addition, when the cantilever beams drive the reflection element to rotate, the reflection element may further be prevented from moving under a driving force of another direction (for example, a horizontal direction), so that rotation of the reflection element is not affected.

In some possible implementations, a length of the contact region between the support structure and the reflection element meets a first preset condition, where the first preset condition is B≤0.1^{∗}A, where B represents a length of the contact region, and A represents a rotation radius of the reflection element. In this design manner, an impact of the support structure on the rotation performance of the reflection element is further reduced.

In some possible implementations, the light reflection assembly further includes a height-limiting structure and a protection structure. The height-limiting structure is located on the substrate. The protection structure is located on the height-limiting structure. The protection structure is configured to restrict a motion amplitude of the reflection element from protruding from a plane on which the protection structure is located. If the reflection element moves as a whole toward the protection structure under an impact of an external force, the protection structure may have a function of stopping the reflection element, to protect the reflection element and the cantilever beams that are used to be connected to the reflection element.

In some possible implementations, the protection structure is a light-transmitting element, and the light-transmitting element is configured to transmit incident light to the reflection element. This application provides a specific implementation of the protection structure, to improve practicability of this solution.

In some possible implementations, the protection structure is a protection frame, and the protection frame is hollowed out in the middle. To enable the protection frame to stop the reflection element, a length of a hollow region in the middle of the protection frame in at least one direction is less than the length of the reflection element. The light-transmitting element is replaced with the protection frame to reduce stray light generated by multiple times of specular reflection. Moreover, costs can also be reduced.

In some possible implementations, the protection structure is a lens, and the lens is configured to refract incident light to the reflection element. In some application scenarios, beam shaping may be performed on incident light or emergent light through the lens, without disposing an extra lens on a periphery of the light reflection assembly, so that an optical path can be simplified.

In some possible implementations, a height of the height-limiting structure meets a second preset condition, and the second preset condition is H≥R^{∗}tanθ, where H represents a height of the height-limiting structure, R represents a maximum rotation radius of the reflection element, and θ represents a maximum rotation angle of the reflection element. In the foregoing manner, the protection structure may not affect normal rotation of the reflection element. In some possible implementations, the height-limiting structure and the protection structure are fastened together by using a silk-screen printing manner, and a material of the height-limiting structure may be ink. In this manner, the protection structure can be raised by adding a print. The protection structure and the print are integrated, so that a process of separately disposing the height-limiting structure is reduced, which saves a machining process and enables an overall structure to be more compact.

In some possible implementations, the first cantilever beam and the second cantilever beam are located on different sides of the reflection element and are disposed along the first axial direction. Specific positions for disposing a group of cantilever beams are provided, and implementability of the solution is improved.

In some possible implementations, a third end of the reflection element is connected to the substrate through a third cantilever beam, and a fourth end of the reflection element is connected to the substrate through a fourth cantilever beam. In this solution, a specific quantity of cantilever beams is not limited, and another group of cantilever beams may be added other than the existing group of cantilever beams, so that the reflection element may rotate around a plurality of different axial directions. This meets more application requirements.

In some possible implementations, the third cantilever beam and the fourth cantilever beam are located on different sides of the reflection element and are disposed along a second axial direction. A magnetic structure is further configured to drive the reflection element to rotate around a first axial direction, and the first axial direction and the second axial direction are in a same plane and are perpendicular to each other. Specific positions for disposing the another group of cantilever beams are provided. Implementability of the solution is further improved.

In some possible implementations, a coil is disposed on the back side of the reflection element. The coil is electrically connected to pads on the substrate through conducting wires to form a loop. The conducting wire is configured to transmit a current, so that the coil generates an electromagnetic force and drives the reflection element to rotate. A specific implementation in which the magnetic structure drives the reflection element to rotate is provided, so that the solution is more practical.

In some possible implementations, the conducting wires include a first conducting wire and a second conducting wire, and the pads include a first pad and a second pad. One end of the first conducting wire is connected to the first pad, and the other end of the first conducting wire is arranged along the first cantilever beam and is connected to the coil. One end of the second conducting wire is connected to the second pad, and the other end of the second conducting wire is arranged along the second cantilever beam and is connected to the coil. In the foregoing manner, the conducting wires are arranged along the cantilever beams and are connected to the coil, so that the conducting wires do not entangle with each other, and the conducting wires are arranged more neatly. The conducting wires are protected from being pulled by an external force, and a good protection effect is achieved.

In some possible implementations, the light reflection assembly further includes a printed circuit board (Printed Circuit Board, PCB). The PCB is electrically connected to the first pad and the second pad. The PCB is configured to output a current to the first pad, and the current is input to the coil through the first conducting wire and is transmitted to the second pad through the second conducting wire. The PCB can provide a current required for driving the reflection element. Implementability of this solution is further improved.

In some possible implementations, the magnetic structure includes a first magnet and a second magnet. The first magnet and the second magnet have opposite magnetism. The second magnet is located in the middle of the first magnet. The substrate is located on the first magnet, and the support structure is located on the second magnet. In the foregoing manner, a specific implementation of the magnetic structure is provided. The magnetic structure may form a stable magnetic field, and drive the reflection element to rotate by using a magnetoelectric manner. Implementability of the solution is further improved.

In some possible implementations, the light reflection assembly further includes a housing, and the housing is fastened to outer sides of the magnetic structure and the substrate. The housing is provided for providing better protection for an internal structure of the light reflection assembly.

In some possible implementations, the reflection element is a planar reflector or a curved reflector. This improves flexibility of this solution and meets more application requirements.

According to a second aspect, this application provides an optical switch, including a first fiber collimator, a second fiber collimator, a first light reflection array, and a second light reflection array. The first light reflection array includes a plurality of light reflection assemblies according to any implementation of the first aspect. A structure of the second light reflection array is similar to that of the first light reflection array, and the second light reflection array also includes a plurality of light reflection assemblies according to any implementation of the first aspect. The first fiber collimator is configured to guide an input optical signal to the first light reflection array. The light reflection assembly on the first light reflection array is configured to reflect the optical signal to the light reflection assembly on the second light reflection array. The light reflection assembly on the second light reflection array is configured to reflect the optical signal to the second fiber collimator. The second fiber collimator is configured to output an optical signal. It should be understood that a reflection element in each light reflection assembly on the first light reflection array can rotate, and an optical signal can be reflected to any light reflection assembly on the second light reflection array by adjusting a rotation angle of the reflection element. Therefore, optical switching is implemented.

According to a third aspect, this application provides a photographing apparatus, including the light reflection assembly according to any implementation of the first aspect, a lens assembly, and an image sensor. The light reflection assembly is configured to reflect input light to the lens assembly. The lens assembly is configured to guide the input light to the image sensor. The image sensor is configured to perform imaging based on the input light. It should be understood that, in a process of performing photographing by using the foregoing photographing apparatus, a photographed image may blur due to hand jitter. The reflection element in the light reflection assembly may rotate to change an optical path, to compensate for the jitter to implement an image stabilization function. In addition, the jitter in a photographing process may further cause motion with a large amplitude of the photographing apparatus. A support structure can have a function of stopping the reflection element of the reflective assembly. Therefore, the light reflection assembly is protected from being damaged by the jitter.

According to a fourth aspect, this application provides a radar, including the light reflection assembly according to any implementation of the first aspect, a detector, and a lens. The light reflection assembly is configured to reflect, to the lens, a light beam output by the detector. The light beam is guided to a target object through the lens. A light beam reflected by the target object first passes through the lens, and then is reflected by the light reflection assembly to the detector. The light reflection assembly provided in this application is used in the foregoing radar, and therefore, when the radar is applied to an environment with severe jitter (for example, a vehicle driving environment), a support structure can have a function of stopping a reflection element of the reflective assembly. Therefore, the light reflection assembly is protected from being damaged by the jitter.

In the embodiments of this application, the support structure is located on the magnetic structure. The end that is of the support structure and that is away from the magnetic structure is in contact with the back side of the reflection element. In the foregoing manner, the reflection element of the light reflection assembly can be prevented from moving with a large amplitude in a direction perpendicular to a horizontal plane. This resolves a problem that the cantilever beam is easily damaged.

### BRIEF DESCRIPTION OF DRAWINGS

FIG. 1 is a schematic diagram of a planar structure of a light reflection assembly according to an embodiment of this application;
FIG. 2 is a schematic diagram of a three-dimensional structure of a light reflection assembly according to an embodiment of this application;
FIG. 3 is a schematic diagram of another planar structure of a light reflection assembly according to an embodiment of this application;
FIG. 4 is a schematic diagram of a height-limiting structure according to an embodiment of this application;
FIG. 5 is a schematic diagram of another planar structure of a light reflection assembly according to an embodiment of this application;
FIG. 6 is a schematic diagram of another planar structure of a light reflection assembly according to an embodiment of this application;
FIG. 7 is a schematic diagram of another planar structure of a light reflection assembly according to an embodiment of this application;
FIG. 8 is a schematic diagram of a structure of connection among pads and a coil according to an embodiment of this application;
FIG. 9 is a schematic diagram of another structure of connection among pads and a coil according to an embodiment of this application;
FIG. 10 is a schematic diagram of another planar structure of a light reflection assembly according to an embodiment of this application;
FIG. 11 is a schematic diagram of a structure of a photographing apparatus according to an embodiment of this application; and
FIG. 12 is a schematic diagram of a structure of an optical switch according to an embodiment of this application.

### DESCRIPTION OF EMBODIMENTS

Embodiments of this application provide a light reflection assembly, an optical switch, and a photographing apparatus, to prevent a reflection element of the light reflection assembly from moving with a large amplitude in a direction perpendicular to a horizontal plane, and to resolve a problem that a cantilever beam is easily damaged. In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

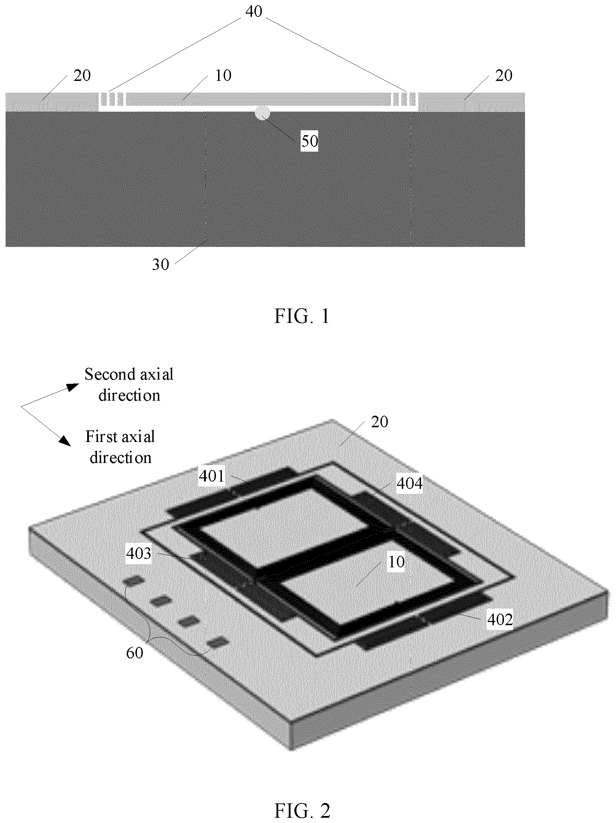

FIG. 1 is a schematic diagram of a planar structure of a light reflection assembly according to an embodiment of this application. As shown in FIG. 1, a light reflection assembly includes a reflection element 10, a substrate 20, a magnetic structure 30, cantilever beams 40, and a support structure 50. The substrate 20 is located on the magnetic structure 30, and the reflection element 10 is located in a hollow region in the middle of the substrate 20. The reflection element 10 is connected to the substrate 20 through the cantilever beams 40, so that the reflection element 10 is supported and fastened. It should be understood that, there are at least two cantilever beams in the light reflection assembly provided in this application. The two cantilever beams may drive the reflection element to rotate around a first axial direction.

On this basis, another two cantilever beams may be further disposed to drive the reflection element to rotate around a second axial direction. A specific quantity of the cantilever beams is not limited in this application. The following describes an embodiment in which four cantilever beams are provided.

FIG. 2 is a schematic diagram of a three-dimensional structure of a light reflection assembly according to an embodiment of this application. A cantilever beam 40 includes at least a first cantilever beam 401, a second cantilever beam 402, a third cantilever beam 403, and a fourth cantilever beam 404. A fastened end of each cantilever beam is connected to a substrate 20, and a movable end of each cantilever beam is connected to a reflection element 10. The first cantilever beam 401 and the second cantilever beam 402 are located on different sides of the reflection element 10 and are disposed along a first axial direction. The third cantilever beam 403 and the fourth cantilever beam 404 are located on different sides of the reflection element 10 and are disposed along a second axial direction. The first axial direction and the second axial direction are on a same plane and are perpendicular to each other.

A front side of the reflection element 10 is configured to reflect incident light, and a coil is disposed on a back side of the reflection element 10. The coil may be electrically connected to pads (pads 60 shown in FIG. 2) on the substrate 20 through conducting wires to form a loop. A magnetic structure 30 forms a magnetic field, and the conducting wire is configured to transmit a current, so that the coil generates an electromagnetic force and drives the reflection element 10 to rotate around the first axial direction or the second axial direction. It should be understood that a shape and a type of the reflection element 10 are not limited in this application. For example, the reflection element 10 may be a circle, or may be a rectangle or another shape. The reflection element 10 may be a planar reflector, or may be another element having a reflection capability, such as a curved reflector.

A support structure 50 is located on the magnetic structure 30, and an end that is of the support structure 50 and that is away from the magnetic structure 30 is in contact with the back side of the reflection element 10. It should be understood that the support structure 50 is fastened to the magnetic structure 30, and the support structure 50 does not move with rotation of the reflection element 10. In other words, the support structure 50 only supports and protects the reflection element 10, without applying an additional force to the reflection element 10.

In a possible implementation, on a premise that rotation of the reflection element is not affected, a position at which the support structure is in contact with the reflection element changes with rotation of the reflection element, so that a rotation angle of the reflection element is more flexible.

It should be noted that, to ensure that the reflection element 10 has plenty of space for rotation, there is a specific spacing between the reflection element 10 and the magnetic structure 30. However, in some scenarios, due to an impact of an external force, the reflection element 10 may move with a large amplitude as a whole toward a direction approaching the magnetic structure 30. In this case, the support structure 50 is in contact with the back side of the reflection element 10 to effectively avoid occurrence of the foregoing situation. Optionally, in some possible implementations, the support structure 50 may not be in contact with the reflection element 10. The end that is of the support structure 50 and that is away from the magnetic structure 30 is close to the back side of the reflection element 10. This can also prevent the reflection element 10 from moving with a large amplitude as a whole toward the direction approaching the magnetic structure 30.

A specific position of the support structure 50 and a size of a contact region between the support structure 50 and the reflection element 10 are not limited in this application. In a preferred implementation, to minimize an impact of the support structure 50 on rotation performance of the reflection element 10, the support structure 50 should be in contact with a central position of the reflection element 10. It should be understood that the central position of the reflection element 10 may be a geometric center of the reflection element 10, or may be a position near the geometric center, or may be a central region including the geometric center. This is not specifically limited herein. In addition, a length of the contact region between the support structure 50 and the reflection element 10 in the first axis direction should meet the following preset condition, where the preset condition is B≤0.1^{∗}A, where B represents the length of the contact region in the first axis direction, and A represents a rotation radius of the reflection element around the second axis. Similarly, a length of the contact region in the second axis direction should meet the following preset condition, where the preset condition is C≤0.1^{∗}D, where C represents the length of the contact region in the second axis direction, and D represents a rotation radius of the reflection element around the first axis.

It should be understood that a material of the support structure 50 is not limited in this application. For example, a material of the support structure 50 is gel, and the support structure 50 is bonded to the back side of the reflection element 10. In this way, the reflection element 10 can be prevented from moving with a large amplitude as a whole in a direction away the magnetic structure 30. In addition, while the cantilever beams drive the reflection element 10 to rotate, the reflection element 10 may further be prevented from moving under a driving force of another direction (for example, a horizontal direction), so that the rotation of the reflection element 10 is not affected. For another example, a material of the support structure 50 may also be a rigid material. The support structure 50 is in hard contact with the back side of the reflection element 10. A complex form-in-place process is avoided and a processing process is simplified. In addition, a shape of the support structure 50 is not limited in this application. The support structure 50 may be a spherical shape shown in FIG. 1, or may be a cylindrical shape or another shape.

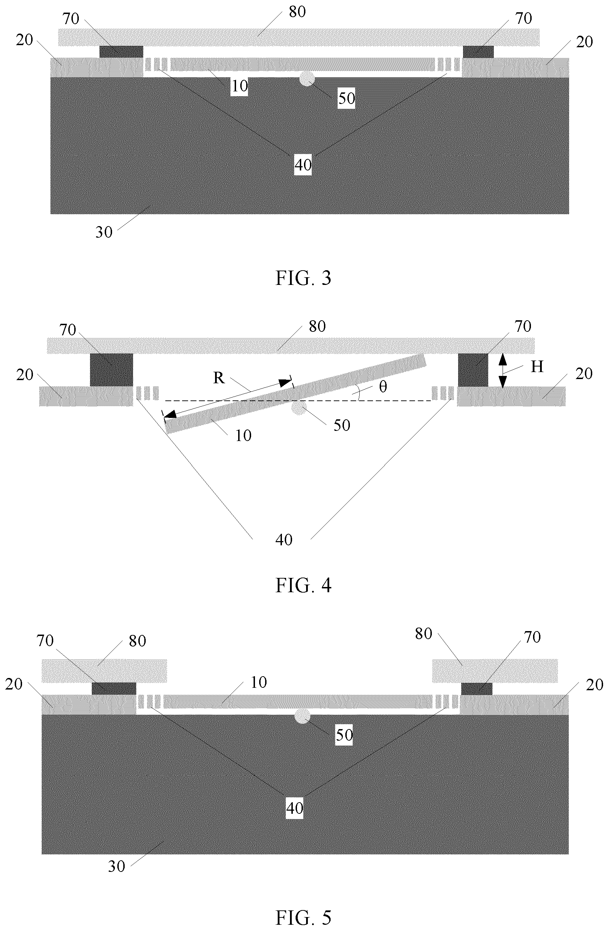

FIG. 3 is a schematic diagram of another planar structure of a light reflection assembly according to an embodiment of this application. As shown in FIG. 3, the light reflection assembly further includes a height-limiting structure 70 and a protection structure 80. The height-limiting structure 70 is located on the substrate 20, and the protection structure 80 is located on the height-limiting structure 70. The protection structure 80 is configured to restrict a motion amplitude of the reflection element 10 from protruding from a plane on which the protection structure 80 is located. In other words, if the reflection element 10 moves as a whole toward the protection structure 80 under an impact of an external force, the protection structure 80 can have a function of stopping the reflection element 10.

It should be understood that a coverage area of the height-limiting structure 70 is not limited in this application, provided that the height-limiting structure 70 does not cover the cantilever beam 40 or the reflection element 10. However, to ensure that the protection structure 80 does not affect normal rotation of the reflection element 10, a height of the height-limiting structure 70 should meet the following preset condition: H≥R^{∗}tanθ. FIG. 4 is used as an example, where H represents a height of the height-limiting structure 70, R represents a maximum rotation radius of the reflection element 10, and θ represents a maximum rotation angle of the reflection element 10. It should be understood that the reflection element 10 in this application may rotate around a plurality of axial directions, and rotation radii of the reflection element 10 around different axial directions may be the same or may be different. In this case, provided that the maximum rotation radius of the reflection element 10 meets the preset condition, another rotation radius also meets the preset condition. In addition, considering that a tensile force to which the cantilever beam 40 can be subjected is limited, the maximum rotation angle of the reflection element 10 may be calculated in advance. Therefore, based on the provided R and θ, a minimum height of the height-limiting structure 70 may be calculated through a simple mathematical operation. It should be noted that a distance between the reflection element 10 and the magnetic structure 30 should also meet a preset condition, so that the magnetic structure 30 does not affect the normal rotation of the reflection element 10.

In a possible implementation, the height-limiting structure 70 and the protection structure 80 may be fastened together by using a silk-screen printing manner. A material of the height-limiting structure 70 is ink. In this manner, the protection structure can be raised by adding a print. The protection structure and the print are integrated, so that a process of separately disposing the height-limiting structure is reduced, which saves a machining process and enables an overall structure to be more compact.

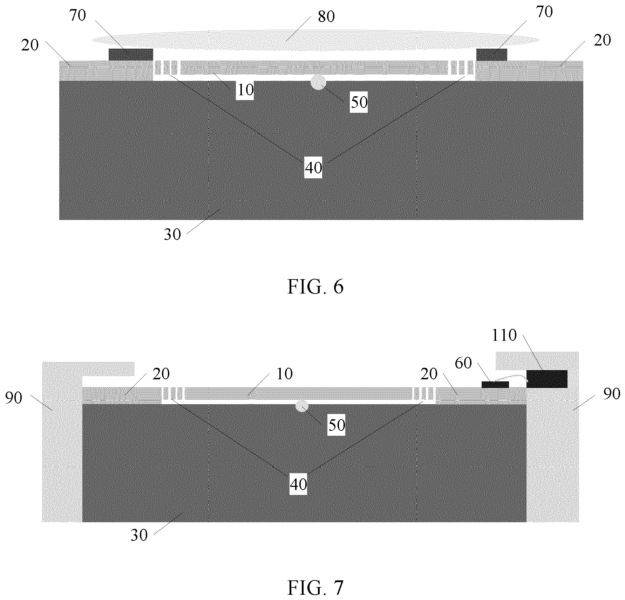

It should be noted that the protection structure in this application may be implemented in a plurality of manners. For example, the protection structure may be a light-transmitting element shown in FIG. 3, and the light-transmitting element can transmit incident light to the reflection element. For another example, the protection structure may be a protection frame shown in FIG. 5. The protection frame is hollowed out in the middle. A length of a hollow region in the middle of the protection frame in at least one direction is less than a length of the reflection element to stop the reflection element. In addition, the light-transmitting element is replaced with the protection frame to reduce stray light generated by multiple times of specular reflection. Moreover, costs can also be reduced. For another example, the protective structure may be a lens shown in FIG. 6. The lens is configured to refract incident light to the reflection element. In some application scenarios, beam shaping may be performed on incident light or emergent light through the lens, without disposing an extra lens on a periphery of the light reflection assembly, so that an optical path can be simplified.

FIG. 7 is a schematic diagram of another planar structure of a light reflection assembly according to an embodiment of this application. As shown in FIG. 7, the light reflection assembly further includes a housing 90, and the housing 90 is fastened to outer sides of the substrate 20 and the magnetic structure 30. A printed circuit board (Printed Circuit Board, PCB) 110 may be further disposed in the housing 90, and the PCB is configured to provide a current required for driving the reflection element 10. The PCB is electrically connected to each pad 60 located on the substrate 20, where some pads are used as current input ends of the coil, and the other pads are used as current output ends of the coil. It should be understood that, in this application, in addition to the foregoing packaging manner of the housing, a chip-scale packaging process may also be used to reduce a packaging size. For example, a wafer-level packaging (Wafer Level Package) may be used.

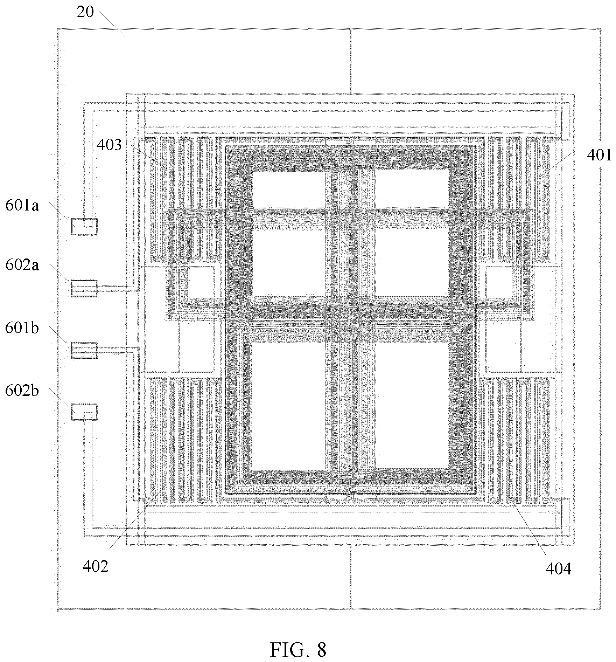

The following describes wiring manners among pads and coils by using some specific examples. FIG. 8 is a schematic diagram of a structure of connection among pads and coils according to an embodiment of this application. As shown in FIG. 8, one end of each conducting wire is connected to a pad, and the other end of each conducting wire is arranged along a cantilever beam and is connected to the coil. Specifically, a conducting wire led out from a pad 601a is arranged along a cantilever beam 401 and is connected to one end of a first coil, and a conducting wire led out from the other end of the first coil is arranged along a cantilever beam 402 and is connected to a pad 601b, so that a current loop is formed among the first coil, the pad 60 1a, and the pad 601b. A conducting wire led out from a pad 602a is arranged along a cantilever beam 403 and is connected to one end of a second coil, and a conducting wire led out from the other end of the second coil is arranged along a cantilever beam 404 and is connected to a pad 602b, so that a current loop is formed among the second coil, the pad 602a, and the pad 602b.

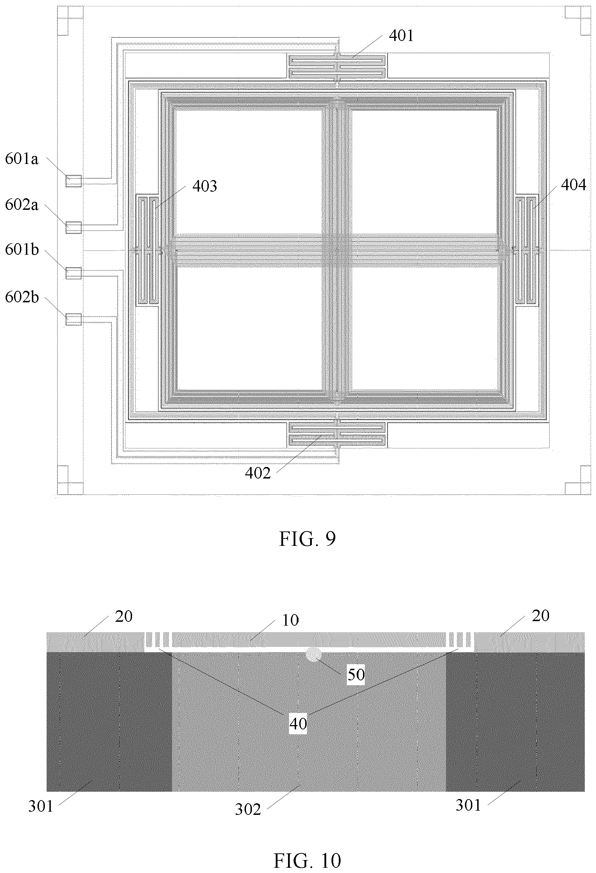

FIG. 9 is a schematic diagram of another structure of connection among pads and a coil according to an embodiment of this application. As shown in FIG. 9, a conducting wire led out from a pad 601a is arranged along a cantilever beam 401 and is connected to one end of a first coil, and a conducting wire led out from the other end of the first coil is arranged along a cantilever beam 402 and is connected to a pad 601b, so that a current loop is formed among the first coil, the pad 601a, and the pad 601b. A conducting wire led out from a pad 602a is arranged along the cantilever beam 401 and a cantilever beam 403 in sequence and is connected to one end of a second coil, and a conducting wire led out from the other end of the second coil is arranged along a cantilever beam 404 and the cantilever beam 402 in sequence and is connected to a pad 602b, so that a current loop is formed among the second coil, the pad 602a, and the pad 602b.

It should be noted that space for arranging a conducting wire may be reserved inside the cantilever beam provided in this application. In the foregoing manner, the conducting wires are arranged along the cantilever beams and are connected to the coils, so that the conducting wires do not entangle with each other, and the conducting wires are arranged more neatly. The conducting wires are protected from being pulled by an external force, and a good protection effect is achieved. Certainly, in an actual application, the conducting wire may also be arranged in another manner. For example, it is also feasible to directly connect the coil to the pads through jump wires. This is not specifically limited in this application.

FIG. 10 is a schematic diagram of another planar structure of a light reflection assembly according to an embodiment of this application. As shown in FIG. 10, the magnetic structure specifically includes a first magnet 301 and a second magnet 302. The second magnet 302 is located in the middle of the first magnet 301, and the first magnet 301 and the second magnet 302 have opposite magnetism, so that a stable magnetic field can be formed. Specifically, the substrate 20 is located on the first magnet 301, and the support structure 50 is located on the second magnet 302.

In the embodiments of this application, the support structure is located on the magnetic structure. The end that is of the support structure and that is away from the magnetic structure is in contact with the back side of the reflection element. In the foregoing manner, the reflection element of the light reflection assembly can be prevented from moving with a large amplitude in a direction perpendicular to a horizontal plane. A problem that the cantilever beam is easily damaged is resolved.

It should be noted that, the light reflection assembly provided in this application may be applied to a plurality of different scenarios. The following provides specific descriptions.

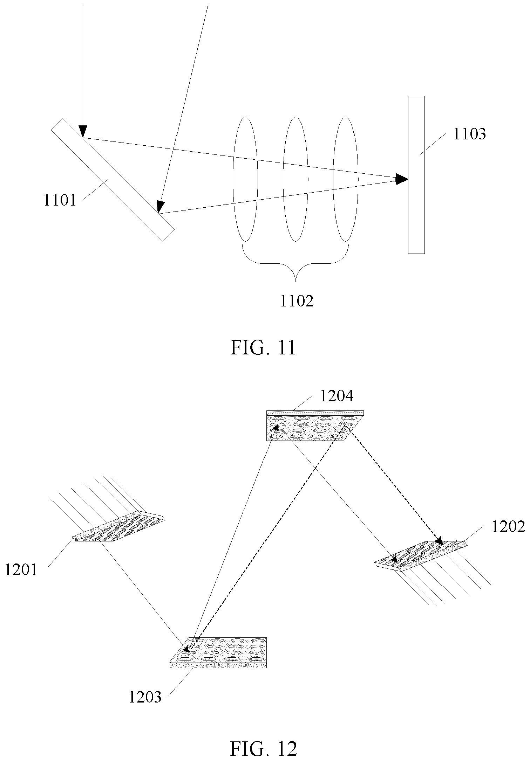

FIG. 11 is a schematic diagram of a structure of a photographing apparatus according to an embodiment of this application. As shown in FIG. 11, the photographing apparatus includes a light reflection assembly 1101, a lens assembly 1102, and an image sensor 1103. The light reflection assembly 1101 may be the light reflection assembly described in any one of the foregoing embodiments. Specifically, the light reflection assembly 1101 reflects input light to the lens assembly 1102. The lens assembly 1102 guides the input light to the image sensor 1103, and the image sensor 1103 performs imaging based on the input light. It should be understood that, in a process of performing photographing by using the foregoing photographing apparatus, a photographed image may blur due to hand jitter.

The reflection element in the light reflection assembly may rotate to change an optical path, to compensate for the jitter to implement an image stabilization function. In addition, the jitter in a photographing process may further cause motion with a large amplitude of the photographing apparatus. The support structure can have a function of stopping the reflection element of the reflective assembly. Therefore, the light reflection assembly is protected from being damaged by the jitter.

FIG. 12 is a schematic diagram of a structure of an optical switch according to an embodiment of this application. As shown in FIG. 12, the optical switch includes a first fiber collimator 1201, a second fiber collimator 1202, a first light reflection array 1203, and a second light reflection array 1204. The first light reflection array 1203 and the second light reflection array 1204 have similar structures and both include the light reflection assembly described in any one of the foregoing embodiment. Specifically, the first fiber collimator 1201 guides an input optical signal to the first light reflection array 1203. The light reflection assembly on the first light reflection array 1203 reflects the optical signal to the second light reflection array 1204. The light reflection assembly on the second light reflection array 1204 then reflects the optical signal to the second fiber collimator 1202. The second fiber collimator 1202 outputs the optical signal. It should be understood that a reflection element in each light reflection assembly on the first light reflection array 1203 can rotate, and an optical signal can be reflected to any light reflection assembly on the second light reflection array 1204 by adjusting a rotation angle of the reflection element. Therefore, optical switching is implemented.

It should be understood that in an actual application, a scenario to which the light reflection assembly provided in this application is applied includes but is not limited to the foregoing enumerated cases. For example, the light reflection assembly may be further applied to another scenario such as a laser radar. Details are not described herein.

It should be noted that the foregoing embodiments are merely used to describe the technical solutions of this application, but are not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A light reflection assembly, comprising a reflection element, a substrate, a first cantilever beam, a second cantilever beam, a magnetic structure, and a support structure, wherein the substrate is located on the magnetic structure, and the reflection element is located in a hollow region in the middle of the substrate;
a first end of the reflection element is connected to the substrate through the first cantilever beam, and a second end of the reflection element is connected to the substrate through the second cantilever beam;
a front side of the reflection element is configured to reflect incident light;
the magnetic structure is configured to drive the reflection element to rotate; and
the support structure is fastened to the magnetic structure, an end that is of the support structure and that is far away from the magnetic structure is in contact with a back side of the reflection element, and the support structure does not move with rotation of the reflection element.

2. The light reflection assembly according to claim 1, wherein a contact region between the support structure and the reflection element is located at a center of the reflection element.

3. The light reflection assembly according to claim 1 or 2, wherein a material of the support structure is gel, and the support structure is bonded to the back side of the reflection element.

4. The light reflection assembly according to any one of claims 1 to 3, wherein a length of the contact region between the support structure and the reflection element meets a first preset condition, and the first preset condition is B≤0.1^{∗}A, wherein B represents a length of the contact region, and A represents a rotation radius of the reflection element.

5. The light reflection assembly according to any one of claims 1 to 3, wherein the light reflection assembly further comprises a height-limiting structure and a protection structure, the height-limiting structure is located on the substrate, the protection structure is located on the height-limiting structure, and the protection structure is configured to restrict a motion amplitude of the reflection element from protruding from a plane in which the protection structure is located.

6. The light reflection assembly according to claim 5, wherein the protection structure is a light-transmitting element.

7. The light reflection assembly according to claim 5, wherein the protection structure is a protection frame, the protection frame is hollowed out in the middle, and a length of a hollow region in the middle of the protection frame in at least one direction is less than a length of the reflection element.

8. The light reflection assembly according to claim 5, wherein the protection structure is a lens, and the lens is configured to refract the incident light to the reflection element.

9. The light reflection assembly according to any one of claims 5 to 8, wherein a height of the height-limiting structure meets a second preset condition, and the second preset condition is H≥R^{∗}tanθ, wherein H represents a height of the height-limiting structure, R represents a maximum rotation radius of the reflection element, and θ represents a maximum rotation angle of the reflection element.

10. The light reflection assembly according to any one of claims 5 to 9, wherein the height-limiting structure and the protection structure are fastened together by using a silk-screen printing manner.

11. The light reflection assembly according to any one of claims 1 to 10, wherein the first cantilever beam and the second cantilever beam are located on different sides of the reflection element and are disposed along a first axial direction.

12. The light reflection assembly according to claim 11, wherein a third end of the reflection element is connected to the substrate through a third cantilever beam, and a fourth end of the reflection element is connected to the substrate through a fourth cantilever beam.

13. The light reflection assembly according to claim 12, wherein the third cantilever beam and the fourth cantilever beam are located on different sides of the reflection element and are disposed along a second axial direction, the magnetic structure is further configured to drive the reflection element to rotate around the first axial direction, and the first axial direction and the second axial direction are in a same plane and are perpendicular to each other

14. The light reflection assembly according to any one of claims 1 to 13, wherein a coil is disposed on the back side of the reflection element, the coil is electrically connected to pads on the substrate through conducting wires to form a loop, and the conducting wires are configured to transmit a current, so that the coil generates an electromagnetic force and drives the reflection element to rotate.

15. The light reflection assembly according to claim 14, wherein the conducting wires comprise a first conducting wire and a second conducting wire; the pads comprise a first pad and a second pad; one end of the first conducting wire is connected to the first pad, and the other end of the first conducting wire is arranged along the first cantilever beam and is connected to the coil; and one end of the second conducting wire is connected to the second pad, and the other end of the second conducting wire is arranged along the second cantilever beam and is connected to the coil.

16. The light reflection assembly according to claim 15, wherein the light reflection assembly further comprises a printed circuit board PCB, the PCB is electrically connected to the first pad and the second pad, the PCB is configured to output the current to the first pad, and the current is input to the coil through the first conducting wire and is transmitted to the second pad through the second conducting wire.

17. The light reflection assembly according to any one of claims 1 to 16, wherein the magnetic structure comprises a first magnet and a second magnet, the first magnet and the second magnet have opposite magnetism, the second magnet is located in the middle of the first magnet, the substrate is located on the first magnet, and the support structure is located on the second magnet.

18. The light reflection assembly according to any one of claims 1 to 17, wherein the light reflection assembly further comprises a housing, and the housing is fastened to outer sides of the magnetic structure and the substrate.

19. The light reflection assembly according to any one of claims 1 to 18, wherein the reflection element is a planar reflector or a curved reflector.

20. An optical switch, comprising: a first fiber collimator, a second fiber collimator, a first light reflection array, and a second light reflection array, wherein the first light reflection array comprises a plurality of light reflection assemblies according to any one of claims 1 to 19, and the second light reflection array comprises a plurality of light reflection assemblies according to any one of claims 1 to 19;
the first fiber collimator is configured to guide an input optical signal to the first light reflection array;
the light reflection assembly on the first light reflection array is configured to reflect the optical signal to the light reflection assembly on the second light reflection array;
the light reflection assembly on the second light reflection array is configured to reflect the optical signal to the second fiber collimator; and
the second fiber collimator is configured to output the optical signal.

21. A photographing apparatus, comprising the light reflection assembly according to any one of claims 1 to 19, a lens assembly, and an image sensor, wherein
the light reflection assembly is configured to reflect input light to the lens assembly;
the lens assembly is configured to guide the input light to the image sensor; and
the image sensor is configured to perform imaging based on the input light.
